# EUROPEAN PATENT APPLICATION

(11) **EP 3 454 476 A1**
(43) Date of publication of application: **13.03.2019**
(21) Application number: 16917330.9
(22) Date of filing: 30.09.2016
(51) Int. Cl.: H04B 7/06, H04B 7/04

(54) **DATA TRANSMISSION METHOD AND APPARATUS**

(71) Applicant: Guangdong Oppo Mobile Telecommunications Corp., Ltd, Dongguan, Guangdong 523860 (CN)
(72) Inventor: TANG, Hai, Dongguan Guangdong 523860 (CN); XU, Hua, Ottawa, Ontario K2M1N6 (CA)
(74) Representative: Manitz Finsterwald Patentanwälte PartmbB
(86) International application number: PCT/CN2016/101214
(87) International publication number: WO 2018/058580

(57) **Abstract**

A data transmission method and device are provided. The method includes that: a terminal receives indication information transmitted by a network-side device, the indication information being configured to indicate a first transmit diversity manner; and the terminal receives first data in the first transmit diversity manner. In the embodiments of the present disclosure, the network-side device transmits the indication information to the terminal to notify the terminal of the transmit diversity manner for data reception. By adopting this solution, data reception based on only a fixed transmit diversity manner in a related technology can be avoided, and the terminal may regulate the transmit diversity manner according to the indication information transmitted by the network-side device, so that flexibility of a data transmission manner is improved.

## Description

### Technical Field

Embodiments of the present disclosure relate to the field of communication, and more particularly to a data transmission method and device.

### Background

Diversity is a method by which a receiver performs specific processing on multiple pieces of received fading characteristics in a mutual independent way to reduce signaling level fluctuations. Diversity refers to diversity transmission and diversity reception. Diversity transmission enables a receiver (for example, a terminal device) to obtain multiple statistically independent fading signals containing the same information. Diversity reception refers to that the receiver merges (selects and combines) the multiple received statistically independent fading signals to reduce influence of signal fading of the signals during transmission on signal transmission quality. In mobile communication, a diversity technology is usually adopted to compensate fading channel loss and may improve transmission quality of a wireless communication channel on the premise of not increasing transmitted power and a bandwidth.

In a Long Term Evolution (LTE) communication system, after a terminal performs blind detection on a Physical Broadcast Channel (PBCH) and determines a transmit diversity manner for transmission of subsequent data, the terminal may transmit the subsequent data in the transmit diversity manner and this transmit diversity manner for data transmission of the terminal is fixed. That is, by such a data transmission method based on a fixed transmit diversity manner, flexibility of a data transmission manner is reduced.

### Summary

Some embodiments of the present disclosure provide a data transmission method and device, which may improve flexibility of a data transmission manner.

A first exemplary embodiment provides a data transmission method, which may include that: a terminal receives indication information transmitted by a network-side device, the indication information being configured to indicate a first transmit diversity manner; and the terminal receives first data in the first transmit diversity manner.

In the embodiment of the present disclosure, the network-side device transmits the indication information to the terminal to notify the terminal of the transmit diversity manner for data reception. By adopting this solution, data reception based on only a fixed transmit diversity manner in a related technology can be avoided, and the terminal may regulate the transmit diversity manner according to the indication information transmitted by the network-side device, so that flexibility of a data transmission manner is improved.

In combination with the first exemplary embodiment, in a possible implementation mode of the first exemplary embodiment, before the operation that the terminal receives the indication information transmitted by the network-side device, the method may further include that: the terminal receives second data in a second transmit diversity manner.

In the embodiments of the present disclosure, the network-side device transmits the indication information to the terminal to notify the terminal to switch a data receiving manner from the second transmit diversity manner to the first transmit diversity manner, so that the network-side device may dynamically regulate a transmission manner of the terminal and configure a transmit diversity manner suitable for the terminal for the terminal, thereby improving the data transmission flexibility and, meanwhile, improving data transmission quality.

In combination with the first exemplary embodiment or any abovementioned possible implementation mode, in a possible implementation mode of the first exemplary embodiment, the terminal may be located in a switching region between a first beam and a second beam, the first data may be transmitted to the terminal through the first beam and the second beam, the first beam may be a source beam serving the terminal before the terminal is switched to the second beam, and the second beam may be a target beam to which the terminal is switched.

In the embodiments of the present disclosure, if the terminal is located in the switching region between the first beam and the second beam, the data may be transmitted to the terminal through the first beam and the second beam, so that the data transmission quality is improved taking advantage of a transmit diversity gain.

In combination with the first exemplary embodiment or any abovementioned possible implementation mode, in a possible implementation mode of the first exemplary embodiment, the first beam and the second beam may be transmitted by a same Transmit and Receive Point (TRP).

In the embodiments of the present disclosure, the first beam and the second beam are transmitted by the same TRP so that the terminal may use the two beams for data reception in the same cell, thereby improving the data transmission quality.

In combination with the first exemplary embodiment or any abovementioned possible implementation mode, in a possible implementation mode of the first exemplary embodiment, the first beam and the second beam may be transmitted by different TRPs respectively.

In the embodiments of the present disclosure, the first beam and the second beam are transmitted by different TRPs so that the terminal may use the two beams for data reception in the same cell or at a junction of adjacent cells, thereby improving the data transmission quality.

In combination with the first exemplary embodiment or any abovementioned possible implementation mode, in a possible implementation mode of the first exemplary embodiment, the operation that the terminal receives the indication information transmitted by the network-side device may include that: the terminal receives the indication information transmitted by the network-side device through physical-layer signaling.

In the embodiments of the present disclosure, the indication information is transmitted through the physical-layer signaling, so that a transmitting speed of the indication information is increased and time for determining the transmit diversity manner according to the indication information may further be saved for the terminal.

In combination with the first exemplary embodiment or any abovementioned possible implementation mode, in a possible implementation mode of the first exemplary embodiment, the operation that the terminal receives the data in the first transmit diversity manner may include that: the terminal determines a physical resource position for transmission of the data according to the physical-layer signaling; and the terminal receives the data at the physical resource position in the first transmit diversity manner.

In the embodiments of the present disclosure, when the indication information is transmitted through the physical-layer signaling, the physical resource position for data transmission may also be indicated to the terminal, so that the terminal may receive the data at the first physical resource position in the first transmit diversity manner.

In combination with the first exemplary embodiment or any abovementioned possible implementation mode, in a possible implementation mode of the first exemplary embodiment, the operation that the terminal receives the indication information transmitted by the network-side device may include that: the terminal receives the indication information transmitted by the network-side device through high-layer signaling.

In the embodiments of the present disclosure, the network-side device transmits the indication information to the terminal through the high-layer signaling to notify the terminal of the transmit diversity manner for data reception, so that the terminal may regulate the transmit diversity manner according to the indication information transmitted by the network-side device, thereby improving the flexibility of the data transmission manner.

In combination with the first exemplary embodiment or any abovementioned possible implementation mode, in a possible implementation mode of the first exemplary embodiment, the operation that the terminal receives the data in the first transmit diversity manner may include that: the terminal prepares to receive the data in the first transmit diversity manner from a time when the high-layer signaling is received.

In the embodiments of the present disclosure, the network-side device transmits the indication information to the terminal through the high-layer signaling to notify the terminal of the transmit diversity manner for data reception, so that the terminal may regulate the transmit diversity manner according to the indication information transmitted by the network-side device, thereby improving the flexibility of the data transmission manner.

In combination with the first exemplary embodiment or any abovementioned possible implementation mode, in a possible implementation mode of the first exemplary embodiment, the first transmit diversity manner may be Space Frequency Block Code-Frequency Switch Transmit Diversity (SFBC-FSTD) and the second transmit diversity manner may be SFBC.

In the embodiments of the present disclosure, the network-side device transmits the indication information to the terminal to notify the terminal to switch the transmit diversity manner from SFBC to SFBC-FSTD so that a transmit diversity gain may be obtained by switching the transmit diversity manner, thereby improving the flexibility of the data transmission manner.

In combination with the first exemplary embodiment or any abovementioned possible implementation mode, in a possible implementation mode of the first exemplary embodiment, the indication information may further include at least one of: a pilot signal for data demodulation in the transmit diversity manner, a quantity of antenna ports corresponding to the transmit diversity manner, resource configuration information for transmission of the pilot signal, and sequence information of the pilot signal.

A second exemplary embodiment provides a data transmission method, which may include that: a network-side device transmits indication information to a terminal, the indication information being configured to indicate a first transmit diversity manner; and the network-side device transmits data to the terminal in the first transmit diversity manner.

In the embodiments of the present disclosure, the network-side device transmits the indication information to the terminal to notify the terminal of the transmit diversity manner for data reception. By adopting this solution, data reception based on only a fixed transmit diversity manner in a related technology can be avoided, and the terminal may regulate the transmit diversity manner according to the indication information transmitted by the network-side device, so that flexibility of a data transmission manner is improved.

In combination with the second exemplary embodiment, in a possible implementation mode of the second exemplary embodiment, the indication information may further be configured to indicate the terminal to be switched from a second transmit diversity manner to the first transmit diversity manner, and the second transmit diversity manner may be a transmit diversity manner currently used for data reception by the terminal.

In the embodiments of the present disclosure, the network-side device transmits the indication information to the terminal to notify the terminal to switch a data receiving manner from the second transmit diversity manner to the first transmit diversity manner, so that the network-side device may dynamically regulate a transmission manner of the terminal and configure a transmit diversity manner suitable for the terminal for the terminal, thereby improving the data transmission flexibility and, meanwhile, improving data transmission quality.

In combination with the second exemplary embodiment or any abovementioned possible implementation mode, in a possible implementation mode of the second exemplary embodiment, before the operation that the network-side device transmits the indication information to the terminal, the method may further include that: the network-side device determines that the terminal is located in a switching region between a first beam and a second beam, the first beam being a source beam serving the terminal before the terminal is switched to the second beam and the second beam being a target beam to which the terminal is switched.

In the embodiments of the present disclosure, if the terminal is located in the switching region between the first beam and the second beam, the data may be transmitted to the terminal through the first beam and the second beam, so that the data transmission quality is improved taking advantage of a transmit diversity gain.

In combination with the second exemplary embodiment or any abovementioned possible implementation mode, in a possible implementation mode of the second exemplary embodiment, the first beam and the second beam may be transmitted by the same TRP.

In the embodiments of the present disclosure, the first beam and the second beam are transmitted by the same TRP so that the terminal may use the two beams for data reception in the same cell, thereby improving the data transmission quality.

In combination with the second exemplary embodiment or any abovementioned possible implementation mode, in a possible implementation mode of the second exemplary embodiment, the first beam and the second beam may be transmitted by different TRPs respectively.

In the embodiments of the present disclosure, the first beam and the second beam are transmitted by different TRPs so that the terminal may use the two beams for data reception in the same cell or at a junction of adjacent cells, thereby improving the data transmission quality.

In combination with the second exemplary embodiment or any abovementioned possible implementation mode, in a possible implementation mode of the second exemplary embodiment, the operation that the network-side device transmits the indication information to the terminal may include that: the network-side device transmits high-layer signaling or physical-layer signaling to the terminal, the high-layer signaling or the physical-layer signaling carrying the indication information.

In the embodiments of the present disclosure, the indication information is transmitted through the physical-layer signaling or the high-layer signaling. Transmitting the indication information through the physical signaling may increase a transmitting speed of the indication information, thereby further saving time for determining the transmit diversity manner according to the indication information for the terminal.

In combination with the second exemplary embodiment or any abovementioned possible implementation mode, in a possible implementation mode of the second exemplary embodiment, the first transmit diversity manner may be SFBC-FSTD and the second transmit diversity manner may be SFBC.

In the embodiments of the present disclosure, the network-side device transmits the indication information to the terminal to notify the terminal to switch the transmit diversity manner from SFBC to SFBC-FSTD so that a transmit diversity gain may be obtained by switching the transmit diversity manner, thereby improving the flexibility of the data transmission manner.

In combination with the second exemplary embodiment or any abovementioned possible implementation mode, in a possible implementation mode of the second exemplary embodiment, the indication information may further include at least one of: a pilot signal for data demodulation in the transmit diversity manner, a quantity of antenna ports corresponding to the transmit diversity manner, resource configuration information for transmission of the pilot signal, and sequence information of the pilot signal.

A third exemplary embodiment provides a data transmission device, which includes modules configured to execute the method in the first exemplary embodiment.

A fourth exemplary embodiment provides a data transmission device, which includes modules configured to execute the method in the second exemplary embodiment.

A fifth exemplary embodiment provides a data transmission device, which includes a memory, a processor, an input/output interface, a communication interface and a bus system. The memory, the processor, the input/output interface and the communication interface are connected through the bus system. The memory is configured to store an instruction. The processor is configured to execute the instruction stored in the memory. When the instruction is executed, the processor executes the method of the first exemplary embodiment through the communication interface and controls the input/output interface to receive input data and information and output data such as an operation result.

A sixth exemplary embodiment provides a data transmission device, which includes a memory, a processor, an input/output interface, a communication interface and a bus system. The memory, the processor, the input/output interface and the communication interface are connected through the bus system. The memory is configured to store an instruction. The processor is configured to execute the instruction stored in the memory. When the instruction is executed, the processor executes the method of the second exemplary embodiment through the communication interface and controls the input/output interface to receive input data and information and output data such as an operation result.

A seventh exemplary embodiment provides a computer-readable storage medium, configured for a program code for a signal detection method, the program code being configured to execute an instruction for the method in the first exemplary embodiment.

An eighth exemplary embodiment provides a computer-readable storage medium, configured for a program code for a signal detection method, the program code being configured to execute an instruction for the method in the second exemplary embodiment.

### Brief Description of the Drawings

In order to describe the technical solutions of the embodiments of the present disclosure more clearly, the drawings required to be used in the embodiments of the present disclosure will be simply introduced below. It is apparent that the drawings described below are only some embodiments of the present disclosure. Other drawings may further be obtained by those of ordinary skill in the art according to these drawings without creative work.
FIG. 1 is a schematic flowchart of a data transmission method according to an embodiment of the present disclosure.
FIG. 2 is a schematic diagram of an application scenario of a data transmission method according to an embodiment of the present disclosure.
FIG. 3 is a schematic diagram of data transmission in a transmit diversity manner of SFBC-FSTD.
FIG. 4 is a schematic diagram of an application scenario of a data transmission method according to another embodiment of the present disclosure.
FIG. 5 is a schematic flowchart of a data transmission method according to another embodiment of the present disclosure.
FIG. 6 is a schematic block diagram of a data transmission device according to an embodiment of the present disclosure.
FIG. 7 is a schematic block diagram of a data transmission device according to another embodiment of the present disclosure.
FIG. 8 is a schematic block diagram of a data transmission device according to another embodiment of the present disclosure.
FIG. 9 is a schematic block diagram of a data transmission device according to another embodiment of the present disclosure.

### Detailed Description of the Embodiments

The technical solutions in the embodiments of the present disclosure will be clearly and completely described below in combination with the drawings in the embodiments of the present disclosure. It is apparent that the described embodiments are not all embodiments but part of embodiments of the present disclosure. All other embodiments obtained by those of ordinary skilled in the art on the basis of the embodiments in the present disclosure without creative work shall fall within the scope of protection of the present disclosure.

It is to be understood that the technical solutions of the embodiments of the present disclosure may be applied to various communication systems, for example, a Global System of Mobile Communication (GSM), a Code Division Multiple Access (CDMA) system, Wideband Code Division Multiple Access (WCDMA), a General Packet Radio Service (GPRS), LTE and 5th-Generation (5G) New Radio (NR).

It is also to be understood that a terminal may be called a terminal device or User Equipment (UE), may alternatively be called a mobile terminal, mobile UE and the like and may communicate with one or more core networks through, for example, a Radio Access Network (RAN). The UE may be a mobile terminal, for example, a mobile phone (or called a "cellular" phone), and a computer with a mobile terminal, for example, a portable, pocket, handheld, computer-embedded or vehicular mobile device, and performs language and/or data exchange with the RAN.

It is further to be understood that a network device may be a device configured to communicate with the mobile device, for example, a network device. The network device may be an Access Point (AP) in a Wireless Local Area Network (WLAN) and a Base Transceiver Station (BTS) in the GSM or CDMA, may alternatively be a Node B (NB) in WCDMA and may alternatively be an Evolutional Node B (eNB or eNodeB) in LTE, or a relay station or AP, or a vehicular device, a wearable device and a network device in a future 5G network, or a network device in a future evolved Public Land Mobile Network (PLMN) or the like.

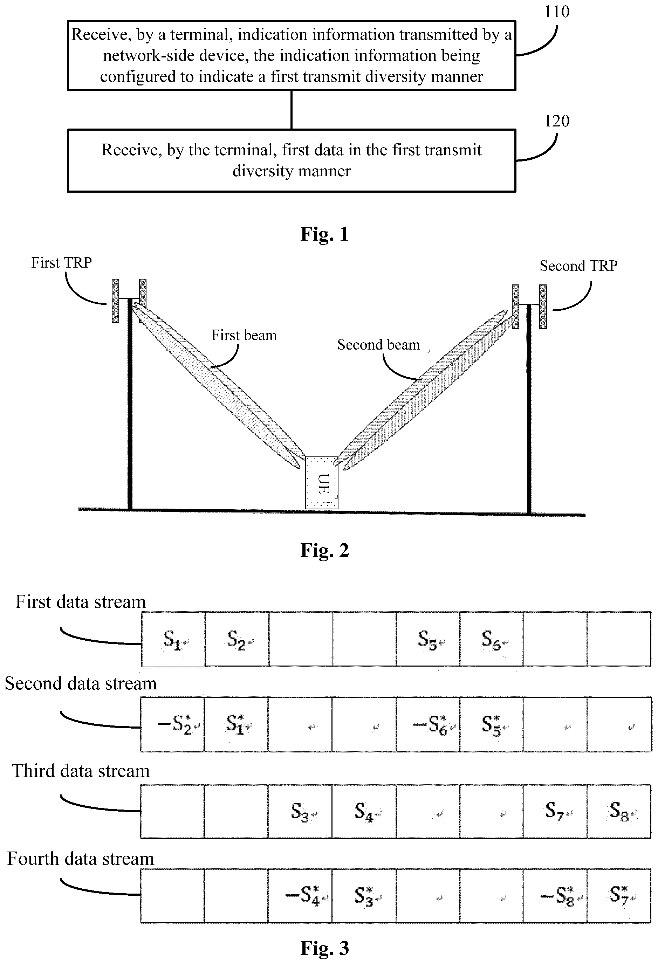

FIG. 1 is a schematic flowchart of a data transmission method according to an embodiment of the present disclosure. The method shown in FIG. 1 includes the following operations shown in the blocks 110 and 120.

In block 110, a terminal receives indication information transmitted by a network-side device, the indication information being configured to indicate a first transmit diversity manner.

In the embodiment, the first transmit diversity manner may be SFBC-FSTD or SFBC, and may alternatively be another transmit diversity manner specified in a future communication standard. There are no limits made to the specific transmit diversity manner in the embodiment of the present disclosure.

It is to be noted that the indication information may be carried in high-layer signaling, and may alternatively be carried in physical-layer (Layer 1 (L1)) signaling. There are no specific limits made to a transmitting manner for the indication information in the embodiment of the present disclosure.

In at least one exemplary embodiment, the indication information may further include at least one of: a pilot signal for data demodulation in the transmit diversity manner, a quantity of antenna ports corresponding to the transmit diversity manner, resource configuration information for transmission of the pilot signal, and sequence information of the pilot signal.

In the embodiment, a correspondence between the number of the antenna ports and the transmit diversity manner may be as follows: a transmit diversity-free manner corresponds to one antenna port, SFBC corresponds to two antenna ports and SFBC-FSTD corresponds to four antenna ports.

The resource configuration information for the pilot signal may be a physical resource position for transmission of the pilot signal, and may alternatively be a time-domain resource position for transmission of the pilot signal or a frequency-domain resource position for transmission of the pilot signal. There are no specific limits made thereto in the present disclosure.

The sequence information of the pilot signal may be a sequence Identifier (ID) of the pilot signal or other information related to a sequence of the pilot signal.

It is to be noted that the pilot signal may be a terminal-specific pilot signal. That is, the terminal may demodulate downlink data transmitted to the terminal through the terminal-specific pilot signal. The terminal-specific pilot signal is not required to be continuously transmitted on the entire frequency band and time like a common pilot signal. The terminal-specific pilot signal may be transmitted in a resource allocated for the terminal only. Therefore, an overhead for transmission of the pilot signal is reduced.

In at least one exemplary embodiment, the operation that the terminal receives the indication information transmitted by the network-side device includes that: the terminal receives the indication information transmitted by the network-side device through physical-layer signaling.

In at least one exemplary embodiment, the operation that the terminal receives data in the transmit diversity manner includes that: the terminal determines a physical resource position for transmission of the data according to the physical-layer signaling; and the terminal receives the data at the physical resource position in the transmit diversity manner.

It is to be noted that the network-side device transmits the indication information to the terminal through the physical-layer signaling and, since the indication information is transmitted directly through the physical-layer (L1) signaling and is not required to be reported to a higher layer (layer 2 or layer 3), compared with transmitting of the indication information to the terminal by the network-side device through the high-layer signaling, the former manner of transmitting the indication information through the physical-layer signaling may save time for transmitting the indication information and enable the terminal to determine the transmit diversity manner for the data according to the indication information faster.

In at least one exemplary embodiment, the operation that the terminal receives the indication information transmitted by the network-side device includes that: the terminal receives the indication information transmitted by the network-side device through high-layer signaling.

In the embodiment, the high-layer signaling may be signaling of a data connection layer, i.e., layer 2, and may alternatively be signaling of a network layer, i.e., layer 3.

In at least one exemplary embodiment, the operation that the terminal receives the data in the transmit diversity manner includes that: the terminal prepares to receive the data in the transmit diversity manner from a time when the high-layer signaling is received.

In the embodiment, the terminal receives the data after a preset time period starting with a moment when the indication information is received.

It is to be noted that the preset time period may be preconfigured for the terminal by the network-side device and may alternatively be transmitted to the terminal by the network-side device. There are no specific limits made thereto in the present disclosure.

In block 120, the terminal receives first data in the first transmit diversity manner.

In at least one exemplary embodiment, before the operation that the terminal receives the indication information transmitted by the network-side device, the method further includes that: the terminal receives second data in a second transmit diversity manner.

In the embodiment, the second transmit diversity manner may be SFBC-FSTD or SFBC, and may alternatively be another transmit diversity manner specified in the future communication standard. There are no limits made to the specific transmit diversity manner in the embodiment of the present disclosure.

It is to be noted that the first transmit diversity manner and the second transmit diversity manner may be the same and may alternatively be different.

The operation that the terminal determines the second transmit diversity manner may be implemented as follows: the terminal performs blind detection on a PBCH, determines a quantity of antenna ports and determines the second transmit diversity manner through a mapping relationship between the quantity of antenna ports and a transmit diversity manner. The terminal may also determine the second transmit diversity manner in a manner that the terminal receives the indication information transmitted by the network-side device. There are no specific limits made to a method for determining the transmit diversity manner in the embodiment of the present disclosure.

In at least one exemplary embodiment, the first transmit diversity manner is SFBC-FSTD and the second transmit diversity manner is SFBC.

In the embodiment, the terminal, before receiving the indication information, may receive data in the transmit diversity manner of SFBC. After the terminal receives the indication information configured to indicate the terminal to transmit data in the first transmit diversity manner, the terminal may receive the data in the first transmit diversity manner.

In at least one exemplary embodiment, the first data is transmitted to the terminal through a first beam and a second beam, the first beam is a source beam providing service for the terminal before the terminal is switched to the second beam, and the second beam is a target beam to which the terminal is switched.

In the embodiment, the beam providing the service for the terminal may refer to that the terminal may use the beam for data transmission.

It is to be noted that, if the first beam corresponds to two antenna ports and the second beam also corresponds to two antenna ports, when the network-side device transmits the first data to the terminal through the first beam and the second beam, the network-side device may indicate, through the indication information, the terminal to use the transmit diversity manner (which may be SFBC-FSTD) corresponding to the four antenna ports to receive the first data.

In at least one exemplary embodiment, the terminal transmits position information to the network-side device, the position information being configured to indicate a present position of the terminal to enable the network-side device to determine whether the terminal is located in a switching region between the first beam and the second beam or not according to the present position information of the terminal.

In at least one exemplary embodiment, the terminal transmits measurement information for different beams to the network-side device, the measurement information being used for providing a basis for determination of the present position of the terminal by the network-side device to enable the network-side device to determine whether the terminal is located in the switching region between the first beam and the second beam or not according to the present position information of the terminal.

In at least one exemplary embodiment, the network-side device may autonomously judge the position of the terminal, the position information being configured to indicate the present position of the terminal to enable the network-side device to determine whether the terminal is located in the switching region between the first beam and the second beam or not according to the present position information of the terminal.

In the embodiment, the switching region between the first beam and the second beam may refer to an overlapped region of coverage of the first beam and coverage of the second beam.

It is to be noted that the terminal located in the region may be in a "soft switching" state. That is, the terminal may be in a communication state that the second beam may be used for data reception and the first beam may also be used for data reception.

In at least one exemplary embodiment, the first beam and the second beam are transmitted by a same TRP.

In the embodiment, transmission of the first beam and the second beam by the same TRP may refer to that the first beam and the second beam belong to the same cell.

In at least one exemplary embodiment, the first beam and the second beam are transmitted by different TRPs respectively.

In the embodiment, the first beam may be transmitted by a first TRP and the second beam may be transmitted by a second TRP. The first TRP and the second TRP may belong to different cells respectively, then the first beam and the second beam belong to different cells respectively. The first TRP and the second TRP may also belong to the same cell, then the first beam and the second beam may also belong to the same cell.

It is to be noted that, when the first TRP and the second TRP belong to different cells respectively, a network-side device where the first TRP is located and a network-side device where the second TRP is located may determine the transmit diversity manner for data transmission of the terminal in a predetermination (or negotiation) manner.

It is to be understood that, when the first TRP and the second TRP belong to different cells respectively, the network-side device where the first TRP is located or the network-side device where the second TRP is located may transmit the indication information to the terminal. There are no specific limits made on which of the first TRP and the second TRP transmits the indication information in the embodiment of the present disclosure.

The embodiment of the present disclosure will be introduced below in combination with specific application scenarios in detail.

FIG. 2 illustrates an application scenario of a data transmission method according to an embodiment of the present disclosure. From the application scenario shown in FIG. 2, it can be seen that the first beam is transmitted by two antenna ports of the first TRP and the second beam is transmitted by two antenna ports of the second TRP. It is to be understood that the first beam and the second beam may be in the same cell, and may alternatively be in different cells. There are no specific limits made thereto in the embodiment of the present disclosure.

The terminal shown in FIG. 2 may use the first beam for data reception and, meanwhile, the terminal may also use the second beam for data reception. That is, the terminal may receive two data streams from the two antenna ports of the first TRP, the terminal may also receive other two data streams from the two antenna ports of the second TRP and. In such case, the terminal may process the four data streams and determine the data transmitted by the network-side device. That is, the terminal receives the data in the transmit diversity manner of SFBC-FSTD.

When the terminal receives the data in the transmit diversity manner of SFBC-FSTD, a schematic diagram of a transmission manner of transmitting data in the transmit diversity manner is shown in FIG. 3. As described above, data reception of the terminal in the transmit diversity manner of SFBC-FSTD can be understood as that the terminal is required to receive the four data streams (referring to a first data stream, second data stream, third data stream and fourth data stream shown in FIG. 3) from the two antenna ports of the first TRP and the two antenna ports of the second TRP respectively.

It is to be noted that a correspondence between the data streams and the antenna ports may be flexible combination. For example, the first data stream and the second data stream may be transmitted by use of the first beam transmitted by the two antenna ports of the first TRP and the third data stream and the fourth data stream may be transmitted by use of the second beam transmitted by the two antenna ports of the second TRP. Alternatively, the first data stream and the third data stream may be transmitted by use of the first beam transmitted by the two antenna ports of the first TRP and the second data stream and the fourth data stream may be transmitted by use of the second beam transmitted by the two antenna ports of the second TRP. There are no specific limits made thereto in the embodiment of the present disclosure.

It is to be understood that the antenna port may refer to a physical transmitting antenna and may alternatively refer to a virtual antenna port bearing a group of pilot signals. There are no specific limits made thereto in the embodiment of the present disclosure.

It is also to be understood that a transmission principle of the transmit diversity manner of SFBC-FSTD belongs to the related art and will not be elaborated herein.

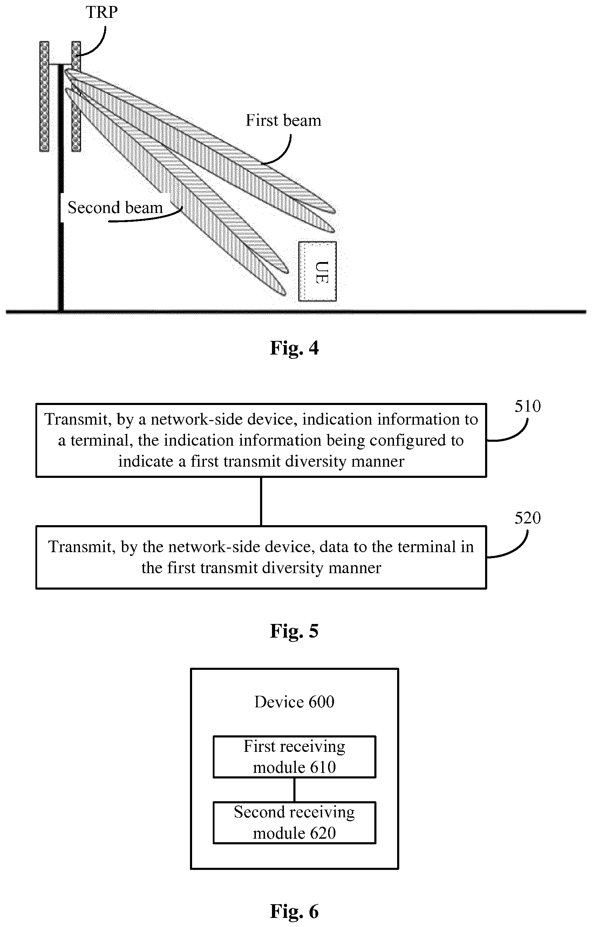

FIG. 4 illustrates an application scenario of a data transmission method according to another embodiment of the present disclosure. From the application scenario shown in FIG. 4, it can be seen that the first beam and the second beam may be transmitted by four antenna ports of the same TRP. The terminal may use the first beam for data reception and, meanwhile, the terminal may also use the second beam for data reception. That is, the terminal may receive two data streams from the two antenna ports of the first TRP, the terminal may also receive other two data streams from the two antenna ports of the second TRP and, in such case, the terminal may process the four data streams and determines the downlink data transmitted by the network-side device. That is, the terminal receives the data in the transmit diversity manner of SFBC-FSTD.

When the terminal receives the data in the transmit diversity manner of SFBC-FSTD, the schematic diagram of the transmission manner of transmitting the data in the transmit diversity manner is shown in FIG. 3. As described above, data reception of the terminal in the transmit diversity manner of SFBC-FSTD can be understood as that the terminal is required to use the first beam and second beam transmitted by the four antenna ports of the TRP to receive the four data streams (referring to the first data stream, second data stream, third data stream and fourth data stream shown in FIG. 3) respectively.

It is to be noted that a corresponding manner for the data streams and the antenna ports may be flexible combination. For example, the first data stream and the second data stream may be transmitted by use of two antenna ports of a first group of the TRP and the third data stream and the fourth data stream may be transmitted by use of two antenna ports of a second group of the TRP. Alternatively, the first data stream and the third data stream may be transmitted by use of the first beam transmitted by the two antenna ports of the first group of the TRP and the second data stream and the fourth data stream may be transmitted by use of the second beam transmitted by the two antenna ports of the second group of the TRP. There are no specific limits made thereto in the embodiment of the present disclosure.

It is to be understood that the antenna port may refer to a physical transmitting antenna and may also refer to a virtual antenna port bearing a group of pilot signals. There are no specific limits made thereto in the embodiment of the present disclosure.

It is also to be understood that the transmission principle of the transmit diversity manner of SFBC-FSTD belongs to the related art and will not be elaborated herein.

FIG. 5 is a schematic flowchart of a data transmission method according to another embodiment of the present disclosure. It is to be understood that specific details about the method shown in FIG. 5 are substantially the same as the method shown in FIG. 5 and will not be elaborated herein for simplicity. The method shown in FIG. 5 includes the following operations shown in blocks 510 and 520.

In block 510, a network-side device transmits indication information to a terminal, the indication information being configured to indicate a first transmit diversity manner.

In block 520, the network-side device transmits data to the terminal in the first transmit diversity manner.

In at least one exemplary embodiment, the indication information is further configured to indicate the terminal to be switched from a second transmit diversity manner to the first transmit diversity manner, and the second transmit diversity manner is a transmit diversity manner currently used for data reception by the terminal.

In at least one exemplary embodiment, before the operation that the network-side device transmits the indication information to the terminal, the method further includes that: the network-side device determines that the terminal is located in a switching region between a first beam and a second beam, the first beam being a source beam serving the terminal before the terminal is switched to the second beam and the second beam being a target beam to which the terminal is switched.

In at least one exemplary embodiment, the first beam and the second beam are transmitted by a same TRP.

In at least one exemplary embodiment, the first beam and the second beam are transmitted by different TRPs respectively.

In at least one exemplary embodiment, the operation that the network-side device transmits the indication information to the terminal includes that: the network-side device transmits high-layer signaling or physical-layer signaling to the terminal, the high-layer signaling or the physical-layer signaling carrying the indication information.

In at least one exemplary embodiment, the first transmit diversity manner is SFBC-FSTD and the second transmit diversity manner is SFBC.

In at least one exemplary embodiment, the indication information further includes at least one of: a pilot signal for data demodulation in the transmit diversity manner, a quantity of antenna ports corresponding to the transmit diversity manner, resource configuration information for transmission of the pilot signal, and sequence information of the pilot signal.

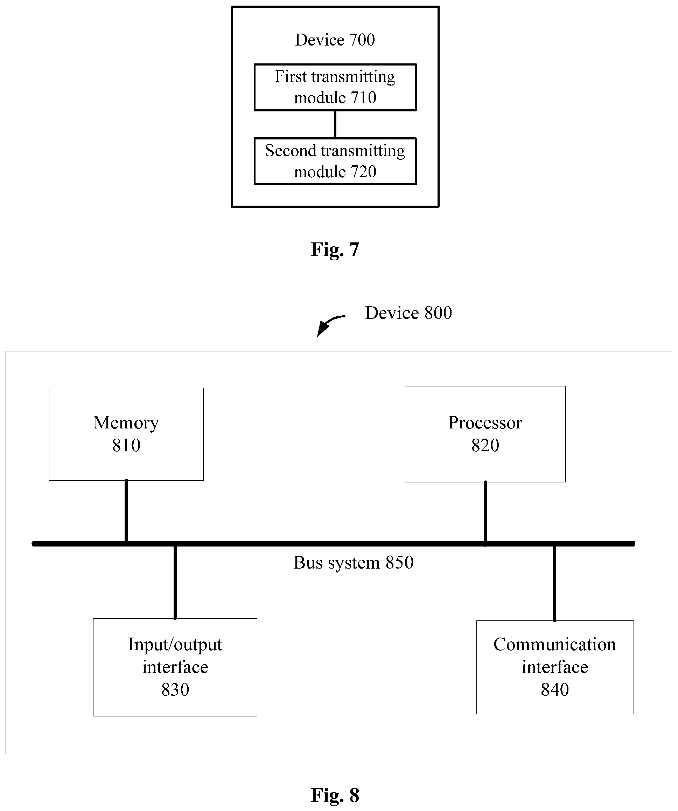

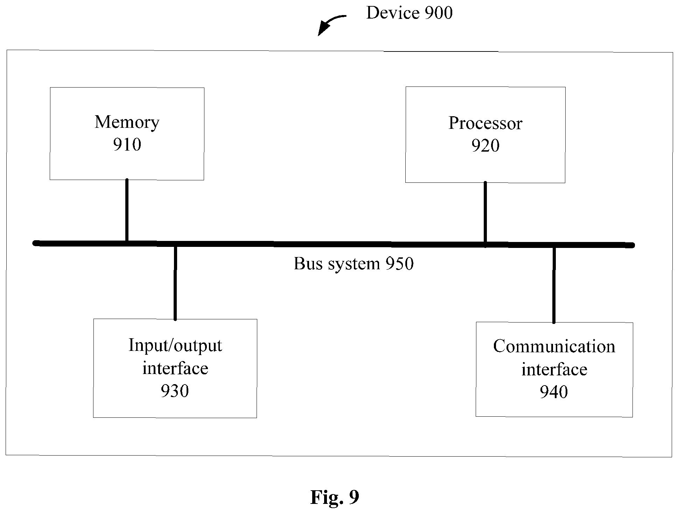

The data transmission methods of the embodiments of the present disclosure are described above in combination with FIG. 1 to FIG. 5 in detail. Data transmission devices of the embodiments of the present disclosure will be described below in combination with FIG. 6 to FIG. 9 in detail. It is to be understood that the devices shown in FIG. 6 and FIG. 8 may implement each block in FIG. 1 and the devices shown in FIG. 7 and FIG. 9 may implement each block in FIG. 5. No more elaborations will be made herein to avoid repetitions.

FIG. 6 is a schematic block diagram of a data transmission device according to an embodiment of the present disclosure. The device 600 shown in FIG. 6 includes a first receiving module 610 and a second receiving module 620.

The first receiving module is configured to receive indication information transmitted by a network-side device, the indication information being configured to indicate a first transmit diversity manner.

The second receiving module is configured to receive first data in the first transmit diversity manner.

In the embodiment of the present disclosure, the network-side device transmits the indication information to a terminal to notify the terminal of the transmit diversity manner for data reception. By adopting this solution, data reception based on only a fixed transmit diversity manner in a related technology can be avoided, and the terminal may regulate the transmit diversity manner according to the indication information transmitted by the network-side device, so that flexibility of a data transmission manner is improved.

In at least one exemplary embodiment, the device further includes a third receiving module, configured to receive second data in a second transmit diversity manner.

In at least one exemplary embodiment, the first data is transmitted to the terminal through a first beam and a second beam, the terminal is located in a switching region between the first beam and the second beam, the first beam is a source beam serving the terminal before the terminal is switched to the second beam, and the second beam is a target beam to which the terminal is switched.

In at least one exemplary embodiment, the first beam and the second beam are transmitted by a same TRP.

In at least one exemplary embodiment, the first beam and the second beam are transmitted by different TRPs respectively.

In at least one exemplary embodiment, the first receiving module is configured to receive the indication information transmitted by the network-side device through physical-layer signaling.

In at least one exemplary embodiment, the first receiving module is further configured to determine a physical resource position for transmission of the data according to the physical-layer signaling and receive the data at the physical resource position in the first transmit diversity manner.

In at least one exemplary embodiment, the first receiving module is configured to receive the indication information transmitted by the network-side device through high-layer signaling.

In at least one exemplary embodiment, the first receiving module is further configured to prepare to receive the data in the first transmit diversity manner from a time when the high-layer signaling is received.

In at least one exemplary embodiment, the first transmit diversity manner is SFBC-FSTD and the second transmit diversity manner is SFBC.

In at least one exemplary embodiment, the indication information further includes at least one of: a pilot signal for data demodulation in the transmit diversity manner, a quantity of antenna ports corresponding to the transmit diversity manner, resource configuration information for transmission of the pilot signal, and sequence information of the pilot signal.

FIG. 7 is a schematic block diagram of a data transmission device according to another embodiment of the present disclosure. The device 700 shown in FIG. 7 includes a first transmitting module 710 and a second transmitting module 720.

The first transmitting module 710 is configured to transmit indication information to a terminal, the indication information being configured to indicate a first transmit diversity manner.

The second transmitting module 720 is configured to transmit data to the terminal in the first transmit diversity manner.

In the embodiment of the present disclosure, a network-side device transmits the indication information to the terminal to notify the terminal of the transmit diversity manner for data reception. By adopting this solution, data reception based on only a fixed transmit diversity manner in a related technology can be avoided, and the terminal may regulate the transmit diversity manner according to the indication information transmitted by the network-side device, so that flexibility of a data transmission manner is improved.

In at least one exemplary embodiment, the indication information is further configured to indicate the terminal to be switched from a second transmit diversity manner to the first transmit diversity manner, and the second transmit diversity manner is a transmit diversity manner currently used for data reception by the terminal.

In at least one exemplary embodiment, the device further includes a determination module, configured to determine that the terminal is located in a switching region between a first beam and a second beam, the first beam being a source beam serving the terminal before the terminal is switched to the second beam and the second beam being a target beam to which the terminal is switched.

In at least one exemplary embodiment, the first beam and the second beam are transmitted by a same TRP.

In at least one exemplary embodiment, the first beam and the second beam are transmitted by different TRPs respectively.

In at least one exemplary embodiment, the first transmitting module is configured to transmit high-layer signaling or physical-layer signaling to the terminal, the high-layer signaling or the physical-layer signaling carrying the indication information.

In at least one exemplary embodiment, the first transmit diversity manner is SFBC-FSTD and the second transmit diversity manner is SFBC.

In at least one exemplary embodiment, the indication information further includes at least one of: a pilot signal for data demodulation in the transmit diversity manner, a quantity of antenna ports corresponding to the transmit diversity manner, resource configuration information for transmission of the pilot signal, and sequence information of the pilot signal.

FIG. 8 is a schematic block diagram of a data transmission device according to another embodiment of the present disclosure. The data transmission device 800 shown in FIG. 8 includes a memory 810, a processor 820, an input/output interface 830, a communication interface 840 and a bus system 850. The memory 810, the processor 820, the input/output interface 830 and the communication interface 840 are connected through the bus system 850. The memory 810 is configured to store an instruction. The processor 820 is configured to execute the instruction stored in the memory 820 to control the input/output interface 830 to receive input data and information and output data such as an operation result and control the communication interface 840 to transmit a signal.

The communication interface 840 is configured to receive indication information transmitted by a network-side device, the indication information being configured to indicate a first transmit diversity manner.

The communication interface 840 is further configured to receive first data in the first transmit diversity manner.

It is to be understood that, in the embodiment of the present disclosure, the processor 820 may adopt a universal Central Processing Unit (CPU), a microprocessor, an Application Specific Integrated Circuit (ASIC) or one or more integrated circuits and is configured to execute a related program to implement the technical solution provided in the embodiment of the present disclosure.

It is also to be understood that the communication interface 840 uses a transceiver device, for example, but not limited to, a transceiver, to implement communication between the signal detection device 800 and another device or a communication network.

The memory 810 may include a Read-Only Memory (ROM) and a Random Access Memory (RAM) and provide the instruction and data for the processor 820. Part of the processor 820 may also include a nonvolatile RAM. For example, the processor 820 may further store information about a device type.

The bus system 850 includes a data bus and may further include a power bus, a control bus, a state signal bus and the like. However, each bus is marked as the bus system 850 in the figure for clear description.

In an implementation process, each block of the method may be completed through an integrated logic circuit of hardware in the processor 820 or an instruction in a software form. The blocks of the methods disclosed in combination with the embodiments of the present disclosure may be directly embodied to be executed and completed by a hardware processor or executed and completed by a combination of hardware and software modules in the processor. The software module may be located in a mature storage medium in this field such as a RAM, a flash memory, a ROM, a programmable ROM or electrically erasable PROM and a register. The storage medium is located in the memory 810, and the processor 820 reads information in the memory 810 and completes the blocks of the methods in combination with hardware. No more detailed descriptions will be made herein to avoid repetitions.

In the embodiment of the present disclosure, the network-side device transmits the indication information to a terminal to notify the terminal of the transmit diversity manner for data reception. By adopting this solution, data reception based on only a fixed transmit diversity manner in a related technology can be avoided, and the terminal may regulate the transmit diversity manner according to the indication information transmitted by the network-side device, so that flexibility of a data transmission manner is improved.

In at least one exemplary embodiment, the communication module is further configured to receive second data in a second transmit diversity manner.

In at least one exemplary embodiment, the first data is transmitted to the terminal through a first beam and a second beam, the terminal is located in a switching region between the first beam and the second beam, the first beam is a source beam serving the terminal before the terminal is switched to the second beam, and the second beam is a target beam to which the terminal is switched.

In at least one exemplary embodiment, the first beam and the second beam are transmitted by a same TRP.

In at least one exemplary embodiment, the first beam and the second beam are transmitted by different TRPs respectively.

In at least one exemplary embodiment, the communication interface is configured to receive the indication information transmitted by the network-side device through physical-layer signaling.

In at least one exemplary embodiment, the communication interface is further configured to determine a physical resource position for transmission of the data according to the physical-layer signaling and receive the data at the physical resource position in the first transmit diversity manner.

In at least one exemplary embodiment, the communication interface is configured to receive the indication information transmitted by the network-side device through high-layer signaling.

In at least one exemplary embodiment, the communication interface is further configured to prepare to receive the data in the first transmit diversity manner from a time when the high-layer signaling is received.

In at least one exemplary embodiment, the first transmit diversity manner is SFBC-FSTD and the second transmit diversity manner is SFBC.

In at least one exemplary embodiment, the indication information further includes at least one of: a pilot signal for data demodulation in the transmit diversity manner, a quantity of antenna ports corresponding to the transmit diversity manner, resource configuration information for transmission of the pilot signal, and sequence information of the pilot signal.

FIG. 9 is a schematic block diagram of a data transmission device according to another embodiment of the present disclosure. Data transmission device 900 shown in FIG. 9 includes a memory 910, a processor 920, an input/output interface 930, a communication interface 940 and a bus system 950. The memory 910, the processor 920, the input/output interface 930 and the communication interface 940 are connected through the bus system 950. The memory 910 is configured to store an instruction. The processor 920 is configured to execute the instruction stored in the memory 920 to control the input/output interface 930 to receive input data and information and output data such as an operation result and control the communication interface 940 to transmit a signal.

The communication interface 940 is configured to receive indication information transmitted by a network-side device, the indication information being configured to indicate a first transmit diversity manner.

The communication interface 940 is further configured to receive data in the first transmit diversity manner.

It is to be understood that, in the embodiment of the present disclosure, the processor 920 may adopt a universal CPU, a microprocessor, an ASIC or one or more integrated circuits and is configured to execute a related program to implement the technical solution provided in the embodiment of the present disclosure.

It is also to be understood that the communication interface 940 uses a transceiver device, for example, but not limited to, a transceiver, to implement communication between the signal detection device 900 and another device or a communication network.

The memory 910 may include a ROM and a RAM and provide the instruction and data for the processor 920. Part of the processor 920 may also include a nonvolatile RAM. For example, the processor 920 may further store information about a device type.

The bus system 950 includes a data bus and may further include a power bus, a control bus, a state signal bus and the like. However, each bus is marked as the bus system 950 in the figure for clear description.

In an implementation process, each block of the method may be completed through an integrated logic circuit of hardware in the processor 920 or an instruction in a software form. The blocks of the methods disclosed in combination with the embodiments of the present disclosure may be directly embodied to be executed and completed by a hardware processor or executed and completed by a combination of hardware and software modules in the processor. The software module may be located in a mature storage medium in this field such as a RAM, a flash memory, a ROM, a programmable ROM or electrically erasable PROM and a register. The storage medium is located in the memory 910, and the processor 920 reads information in the memory 910 and completes the blocks of the methods in combination with hardware. No more detailed descriptions will be made herein to avoid repetitions.

In the embodiment of the present disclosure, a network-side device transmits the indication information to the terminal to notify the terminal of the transmit diversity manner for data reception. By adopting this solution, data reception based on only a fixed transmit diversity manner in a related technology can be avoided, and the terminal may regulate the transmit diversity manner according to the indication information transmitted by the network-side device, so that flexibility of a data transmission manner is improved.

In at least one exemplary embodiment, the indication information is further configured to indicate the terminal to be switched from a second transmit diversity manner to the first transmit diversity manner, and the second transmit diversity manner is a transmit diversity manner currently used for data reception by the terminal.

In at least one exemplary embodiment, the communication interface is further configured to determine that the terminal is located in a switching region between a first beam and a second beam, the first beam being a source beam serving the terminal before the terminal is switched to the second beam and the second beam being a target beam to which the terminal is switched.

In at least one exemplary embodiment, the first beam and the second beam are transmitted by a same TRP.

In at least one exemplary embodiment, the first beam and the second beam are transmitted by different TRPs respectively.

In at least one exemplary embodiment, the communication interface is configured to transmit high-layer signaling or physical-layer signaling to the terminal, the high-layer signaling or the physical-layer signaling carrying the indication information.

In at least one exemplary embodiment, the first transmit diversity manner is SFBC-FSTD and the second transmit diversity manner is SFBC.

In at least one exemplary embodiment, the indication information further includes at least one of: a pilot signal for data demodulation in the transmit diversity manner, a quantity of antenna ports corresponding to the transmit diversity manner, resource configuration information for transmission of the pilot signal, and sequence information of the pilot signal.

Those of ordinary skill in the art may realize that the units and algorithm blocks of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly know that specific working processes of the system, device and unit described above may refer to the corresponding processes in the method embodiments and will not be elaborated herein for convenient and brief description.

In some embodiments provided by the present disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may alternatively be distributed to multiple network units. Part or all of the units may be selected to achieve the purpose of the solutions of the embodiments according to a practical requirement.

In addition, each function unit in each embodiment of the present disclosure may be integrated into a processing unit, each unit may also exist independently, and two or more than two units may alternatively be integrated into a unit.

When being realized in form of software functional unit and sold or used as an independent product, the function may also be stored in a computer-readable storage medium. Based on such an understanding, the technical solutions of the present disclosure substantially or parts making contributions to the related art or part of the technical solutions may be embodied in form of software product, and the computer software product is stored in a storage medium, including a plurality of instructions configured to enable a computer device (which may be a personal computer, a server, a network device or the like) to execute all or part of the blocks of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation mode of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A data transmission method, comprising:
receiving, by a terminal, indication information transmitted by a network-side device, the indication information being configured to indicate a first transmit diversity manner; and
receiving, by the terminal, first data in the first transmit diversity manner.

2. The method as claimed in claim 1, before receiving, by the terminal, the indication information transmitted by the network-side device, further comprising:
receiving, by the terminal, second data in a second transmit diversity manner.

3. The method as claimed in claim 1 or 2, wherein the first data is transmitted to the terminal through a first beam and a second beam, the terminal is located in a switching region between the first beam and the second beam, the first beam is a source beam serving the terminal before the terminal is switched to the second beam, and the second beam is a target beam to which the terminal is switched.

4. The method as claimed in claim 3, wherein the first beam and the second beam are transmitted by a same Transmit and Receive Point (TRP).

5. The method as claimed in claim 3, wherein the first beam and the second beam are transmitted by different TRPs respectively.

6. The method as claimed in any one of claims 1 to 5, wherein receiving, by the terminal, the indication information transmitted by the network-side device comprises:
receiving, by the terminal, the indication information transmitted by the network-side device through physical-layer signaling.

7. The method as claimed in claim 6, wherein receiving, by the terminal, the data in the first transmit diversity manner comprises:
determining, by the terminal, a physical resource position for transmission of the data according to the physical-layer signaling; and
receiving, by the terminal, the data at the physical resource position in the first transmit diversity manner.

8. The method as claimed in any one of claims 1 to 5, wherein receiving, by the terminal, the indication information transmitted by the network-side device comprises:
receiving, by the terminal, the indication information transmitted by the network-side device through high-layer signaling.

9. The method as claimed in claim 8, wherein receiving, by the terminal, the data in the first transmit diversity manner comprises:
preparing to receive, by the terminal, the data in the first transmit diversity manner from a time when the high-layer signaling is received.

10. The method as claimed in any one of claims 2 to 9, wherein the first transmit diversity manner is Space Frequency Block Code-Frequency Switch Transmit Diversity (SFBC-FSTD) and the second transmit diversity manner is SFBC.

11. The method as claimed in any one of claims 1 to 10, wherein the indication information further comprises at least one of:
a pilot signal for data demodulation in the transmit diversity manner, a quantity of antenna ports corresponding to the transmit diversity manner, resource configuration information for transmission of the pilot signal, and sequence information of the pilot signal.

12. A data transmission method, comprising:
transmitting, by a network-side device, indication information to a terminal, the indication information being configured to indicate a first transmit diversity manner; and
transmitting, by the network-side device, data to the terminal in the first transmit diversity manner.

13. The method as claimed in claim 12, wherein the indication information is further configured to indicate the terminal to be switched from a second transmit diversity manner to the first transmit diversity manner, and the second transmit diversity manner is a transmit diversity manner currently used for data reception by the terminal.

14. The method as claimed in claim 12 or 13, before transmitting, by the network-side device, the indication information to the terminal, further comprising:
determining, by the network-side device, that the terminal is located in a switching region between a first beam and a second beam, the first beam being a source beam serving the terminal before the terminal is switched to the second beam and the second beam being a target beam to which the terminal is switched.

15. The method as claimed in claim 14, wherein the first beam and the second beam are transmitted by a same Transmit and Receive Point (TRP).

16. The method as claimed in claim 14, wherein the first beam and the second beam are transmitted by different TRPs respectively.

17. The method as claimed in any one of claims 12 to 16, wherein transmitting, by the network-side device, the indication information to the terminal comprises:
transmitting, by the network-side device, high-layer signaling or physical-layer signaling to the terminal, the high-layer signaling or the physical-layer signaling carrying the indication information.

18. The method as claimed in any one of claims 13 to 17, wherein the first transmit diversity manner is Space Frequency Block Code-Frequency Switch Transmit Diversity (SFBC-FSTD) and the second transmit diversity manner is SFBC.

19. The method as claimed in any one of claims 12 to 18, wherein the indication information further comprises at least one of:
a pilot signal for data demodulation in the transmit diversity manner, a quantity of antenna ports corresponding to the transmit diversity manner, resource configuration information for transmission of the pilot signal, and sequence information of the pilot signal.

20. A data transmission device, comprising:
a first receiving module, configured to receive indication information transmitted by a network-side device, the indication information being configured to indicate a first transmit diversity manner; and
a second receiving module, configured to receive first data in the first transmit diversity manner.

21. The device as claimed in claim 20, further comprising:
a third receiving module, configured to receive second data in a second transmit diversity manner.

22. The device as claimed in claim 20 or 21, wherein the first data is transmitted to a terminal through a first beam and a second beam, the terminal is located in a switching region between the first beam and the second beam, the first beam is a source beam serving the terminal before the terminal is switched to the second beam, and the second beam is a target beam to which the terminal is switched.

23. The device as claimed in claim 22, wherein the first beam and the second beam are transmitted by a same Transmit and Receive Point (TRP).

24. The device as claimed in claim 22, wherein the first beam and the second beam are transmitted by different TRPs respectively.

25. The device as claimed in any one of claims 20 to 24, wherein the first receiving module is configured to:
receive the indication information transmitted by the network-side device through physical-layer signaling.

26. The device as claimed in claim 25, wherein the first receiving module is further configured to:
determine a physical resource position for transmission of the data according to the physical-layer signaling; and
receive the data at the physical resource position in the first transmit diversity manner.

27. The device as claimed in any one of claims 20 to 24, wherein the first receiving module is configured to:
receive the indication information transmitted by the network-side device through high-layer signaling.

28. The device as claimed in claim 27, wherein the first receiving module is further configured to:
prepare to receive the data in the first transmit diversity manner from a time when the high-layer signaling is received.

29. The device as claimed in any one of claims 20 to 28, wherein the first transmit diversity manner is Space Frequency Block Code-Frequency Switch Transmit Diversity (SFBC-FSTD) and the second transmit diversity manner is SFBC.

30. The device as claimed in any one of claims 20 to 29, wherein the indication information further comprises at least one of:
a pilot signal for data demodulation in the transmit diversity manner, a quantity of antenna ports corresponding to the transmit diversity manner, resource configuration information for transmission of the pilot signal, and sequence information of the pilot signal.

31. A data transmission device, comprising:
a first transmitting module, configured to transmit indication information to a terminal, the indication information being configured to indicate a first transmit diversity manner; and
a second transmitting module, configured to transmit data to the terminal in the first transmit diversity manner.

32. The device as claimed in claim 31, wherein the indication information is further configured to indicate the terminal to be switched from a second transmit diversity manner to the first transmit diversity manner, and the second transmit diversity manner is a transmit diversity manner currently used for data reception by the terminal.

33. The device as claimed in claim 31 or 32, further comprising:
a determination module, configured to determine that the terminal is located in a switching region between a first beam and a second beam, the first beam being a source beam serving the terminal before the terminal is switched to the second beam and the second beam being a target beam to which the terminal is switched.

34. The device as claimed in claim 33, wherein the first beam and the second beam are transmitted by a same Transmit and Receive Point (TRP).

35. The device as claimed in claim 33, wherein the first beam and the second beam are transmitted by different TRPs respectively.

36. The device as claimed in any one of claims 31 to 35, wherein the first transmitting module is configured to:
transmit high-layer signaling or physical-layer signaling to the terminal, the high-layer signaling or the physical-layer signaling carrying the indication information.

37. The device as claimed in any one of claims 32 to 36, wherein the first transmit diversity manner is Space Frequency Block Code-Frequency Switch Transmit Diversity (SFBC-FSTD) and the second transmit diversity manner is SFBC.

38. The device as claimed in any one of claims 31 to 37, wherein the indication information further comprises at least one of:
a pilot signal for data demodulation in the transmit diversity manner, a quantity of antenna ports corresponding to the transmit diversity manner, resource configuration information for transmission of the pilot signal, and sequence information of the pilot signal.
